# EUROPÄISCHE PATENTSCHRIFT

(11) **EP 2 281 189 B1**
(45) Veröffentlichungstag und Bekanntmachung des Hinweises auf die Patenterteilung: **07.10.2015**
(21) Anmeldenummer: 09761629.6
(22) Anmeldetag: 28.05.2009
(51) Int. Cl.: G01N 29/26, G10K 11/34

(54) **VERFAHREN ZUR ZERSTÖRUNGSFREIEN PRÜFUNG VON GEGENSTÄNDEN MITTELS ULTRASCHALL**
METHOD FOR THE NON-DESTRUCTIVE TESTING OF OBJECTS USING ULTRASOUND
PROCÉDÉ DE CONTRÔLE NON DESTRUCTIF D'OBJETS PAR ULTRASONS

(30) Priorität: 28.05.2008 DE 102008002860
(43) Veröffentlichungstag der Anmeldung: 09.02.2011
(73) Patentinhaber: GE Inspection Technologies GmbH, 50354 Hürth (DE)
(72) Erfinder: KOCH, Roman, 63825 Blankenbach (DE); FALTER, Stephan, 52152 Simmerath (DE); DE ODORICO, Walter, 65779 Kelkheim (DE); FINGER, Gerhard, 63694 Limeshain (DE); BUSCH, Klaus-Peter, 63517 Rodenbach (DE)
(74) Vertreter: Patentanwälte Bauer Vorberg Kayser
(86) Internationale Anmeldenummer: PCT/EP2009/056581
(87) Internationale Veröffentlichungsnummer: WO 2009/150066

(56) Entgegenhaltungen:
- US-A- 4 180 790
- US-A- 4 241 610
- US-A- 4 528 854
- US-A- 5 014 712
- US-A- 5 235 982
- US-A- 5 846 201
- US-A- 5 851 187

## Beschreibung

Die Erfindung bezieht sich auf ein Verfahren zur Verarbeitung von Signalen, die bei einer zerstörungsfreien Prüfung von Gegenständen wie Rohren, Stangen, Blechen oder ebenen wie auch komplex geformten Komponenten aus CFK durch Reflexion von Ultraschallwellen an Fehlstellen der Struktur des Gegenstandes erzeugt werden.

Ein Verfahren der eingangs genannten Art ist in der DE-A- 10 2005 051 781 beschrieben, die sich auf ein Verfahren zur zerstörungsfreien Untersuchung eines Prüfkörpers mittels Ultraschall bezieht. Bei diesem Verfahren werden mit einem oder einer Vielzahl von Ultraschallwandlern Ultraschallwellen in den Prüfkörper eingekoppelt und innerhalb des Prüfkörpers reflektierte Ultraschallwellen von einer Vielzahl von Ultraschallwandlern empfangen und in Ultraschallsignale umgewandelt. Es wird ein Ultraschallwandler an einer Oberfläche des Prüfkörpers derart vorgesehen und aktiviert, dass sich die an den Prüfkörper angekoppelten Ultraschallwellen innerhalb des Prüfkörpers räumlich weitgehend gleich verteilt ausbreiten. Anschließend werden die innerhalb des Prüfkörpers reflektierten Ultraschallwellen mit einer Vielzahl m von an der Oberfläche vorgesehenen Ultraschallwandlern empfangen und m Ultraschallzeitsignale, in denen zeitaufgelöst Amplitudeninformationen enthalten sind, generiert.

Die m Ultraschallzeitsignale werden abgespeichert. Anschließend wird ein 3-dimensionales Volumenbild, ein Sektorbild in Form eines 2-dimensionalen Ultraschallbildes durch den Prüfkörper oder ein A-Bild in Form eines 1-dimensionalen, längs eines vorgebbaren Einschallwinkels zeit- und ortsauflösenden Ültraschallsignals, ausschließlich unter Verwendung wenigstens eines Teils der m Ultraschallzeitsignale rekonstruiert.

Die DE-A-10 2006 003 978 bezieht sich auf ein Verfahren zur zerstörungsfreien Untersuchung eines wenigstens einen akustisch anisotropen Werkstoffbereich aufweisenden Prüfkörpers mittels Ultraschall. Dabei werden den akustisch anisotropen Werkstoffbereich beschreibende, richtungsspezifische Schallausbreitungseigenschaften ermittelt oder bereitgestellt. Ferner erfolgt ein Einkoppeln von Ultraschallwellen in den akustisch anisotropen Werkstoffbereich des Prüfkörpers und ein Empfangen von im Inneren des Prüfkörpers reflektierten Ultraschallwellen mit einer Vielzahl von Ultraschallwandlern.

Die mittels der Vielzahl von Ultraschallwandlern generierten Ultraschallsignale werden derart ausgewertet, dass die Auswertung richtungsselektiv unter Zugrundelegung der richtungsspezifischen Schallausbreitungseigenschaften erfolgt.

Bei dem Verfahren wird ein Prüfkopf mit n Ultraschallwandlern eingesetzt, von denen eine Anzahl i Ultraschallsender festgelegt wird, die zeitgleich aktiviert werden. Über die Anzahl i der Ultraschallsender und die konkrete Zusammensetzung der Spendergruppe, insbesondere deren Anordnung auf der Prüfkörperoberfläche, wird zudem die Gesamtabstrahlcharakteristik (Apertur) der Sendergruppe und darüber hinaus die Empfindlichkeit und das Auflösungsvermögen der Messungen bestimmt. Allerdings ist die Zahl i kleiner als die Gesamtzahl der Ultraschallsender des Prüfkopfes. Die Gesamtabstrahlcharakterisitik wird ausschließlich über die Anzahl i der Ultraschallsender bestimmt.

Die US-B-4,989,143 bezieht sich auf eine kohärente Energiestrahldarstellung und insbesondere auf ein neues Verfahren zur verbesserten adaptiven Bildung eines kohärenten Strahls unter Verwendung interaktiver Phasenkonjugation, um Effekten der inhomogenen Wellenablenkung entgegenzuwirken. Hinweise zur Verbesserung der Signalenergie und Auslesung für Phased Array-Anwendungen für unterschiedliche Störstellentiefen sind dieser Druckschrift nicht zu entnehmen.

Ein weiteres Verfahren ist in der EP-B-1 649 301 beschrieben. Bei diesem Verfahren wird eine komplette Wellenfront auf zumindest einen zu prüfenden Abschnitt des Gegenstandes mittels einer Vielzahl unabhängiger Sendeelemente ausgesendet. Anschließend wird eine von der Struktur des Gegenstandes reflektierte Welle mittels einer Vielzahl voneinander unabhängiger Empfangselemente empfangen. Die von den Empfangselementen empfangenen Signale werden in Digitalisierungsschritten digitalisiert und weiterverarbeitet. Eine dynamische Tiefenfokussierung bzw. eine Aperturadaption ist in der EP-B-1 649 301 nicht angesprochen.

In der US-B-7,263,888 wird ein zweidimensionales Phased Array zur volumetrischen Ultraschallprüfung sowie ein Verfahren zur Verwendung des Phased Arrays beschrieben. Das Phased Array besteht aus einer Vielzahl von Ultraschallschwingern, die in einem rechtwinkligen Muster angeordnet sind. Das zweidimensionale Array ermöglicht die elektronische Einstellung von Brennpunkteigenschaften und Größe der Apertur/Blende sowohl in Seiten- als auch in Höhenrichtungen, so dass gleichförmige und/oder spezifizierte Schallfeldcharakteristika an jeder oder allen Positionen in der getesteten Komponente erreicht werden können.

Auf jedes der Ultraschallelemente kann eine Modulation angewendet werden, um einen Abtaststrahl zu formen und zumindest einen Bereich des Prüfmaterials mit dem Abtaststrahl abzutasten.

Das 2-dimensionale Phased Array bietet gegenüber einem 1-dimensionalen linearen Array den Vorteil, dass dieses in eine Vielzahl von diskreten Ultraschallschwingern separiert und/oder unterteilt ist, die sich sowohl in X- als auch in Z-Richtung erstrecken. Folglich kann die Bildung eines Abtaststrahls sowohl in der X-Y-Ebene als auch in der Z-Y-Ebene stattfinden. Dies ermöglicht eine 3-dimensionale Steuerung/Kontrolle des Abtaststrahls in Bezug auf Brennweitentiefe, Steuerwinkel und Brennweitengeometrie. Die Steuerung der Apertur trägt ebenfalls zur Bildung des Abtaststrahls bei. Die Apertur des Arrays kann durch Multiplexen des Abtaststrahls durch Verbindung synchroner Kanäle mit einzelnen Ultraschallschwingern des Arrays ausgewählt werden. Auch kann die Größe der Apertur sowohl in X- als auch in Z-Richtung gesteuert und/oder justiert werden.

Ein Verfahren und eine Vorrichtung zur Ultraschallprüfung unterschiedlicher Zonen eines Werkstücks ist in US-A-5,533,401 beschrieben. Dabei wird eine Vielzahl von Ultraschall-Transducern mit Fokuszonen mit unterschiedlich großen Tiefen angeordnet, um einen stangenförmigen Titan-Körper über seine Dicke zu prüfen. Die Fokuszonen überlappen partiell die angrenzenden Fokuszonen, so dass eine vollständige Überprüfung über die Dicke des gesamten Stangenabschnitts gewährleistet ist. Die reflektierten Signale der Transducer-Empfänger werden in digitaler Form verarbeitet, um ein Bild des Stangenabschnitts zu generieren.

Ein derartiges Verfahren ist allerdings aufwendig, da jeder Prüfkopf einzeln justiert werden muss und eine Anpassung an Oberflächenunebenheiten schwierig ist.

In der US-A-5,235,982 ist ein Verfahren zur dynamischen Sendefokussierung eines gesteuerten Ultraschallstrahls beschrieben. Es wird vorgeschlagen, einen Ultraschall-Sendestrahl zeitlich verzögert nacheinander auszusenden und aus den empfangenen Einzelsignalen ein Empfangssignal zusammenzusetzen. Die dynamische Sendefokussierung erfolgt bereits nach Empfang der Empfangssignale im analogen Bereich, ohne dass diese zuvor digitalisiert werden.

In der US-A-5,014,712 wird ein Verfahren zur codierten Aussendung zur dynamischen Sendefokussierung eines Ultraschallstrahls beschrieben. Auch bei diesem Verfahren werden Ultraschall-Sendesignale zeitlich verzögert, wobei eine Verzögerung nur beim Senden der Ultraschallsignale vorgesehen ist

In der US-A-5,846,201 wird ein System zur Darstellung von Ultraschallsignalen mit einem Verfahren zur Vergrößerung der Fokussierungsebene beschrieben. Die mittels eines Transducer-Arrays ausgesendeten Signale werden erfasst, einem Signalformer zugeführt und anschließend einer Signalverarbeitung unterzogen. Die so verarbeiteten Signale werden digitalisiert, nachbearbeitet und sodann angezeigt. Durch das System wird die Kanalverteilung zur verbesserten elektronischen Fokussierung in der Abtastebene optimiert.

Zu den Verfahren gemäß US-A-5,235,982, US-A-5,014,712 sowie US-A-5,846,201 ist anzumerken, dass sich diese Ultraschallverfahren im medizinischen Bereich, d. h. zur Untersuchung von anatomischen Merkmalen eines Patienten beziehen, d. h. für Materialien mit einem hohen Dämpfungsfaktor geeignet sind.

Davon ausgehend liegt der vorliegenden Erfindung die Aufgabe zu Grunde, ein Verfahren und eine Vorrichtung der eingangs genannten Art dahingehend weiterzubilden, dass die Signalenergie- und -auflösung für Phased Array-Anwendungen für unterschiedliche Störstellentiefen verbessert wird.

Die Aufgabe wird erfindungsgemäß u. a. durch die Merkmale des Anspruchs 1 gelöst. Durch die Erfindung wird erreicht, dass bereits während des Empfangs eine kontinuierliche Änderung von Verzögerungswerten und/oder der Anzahl von Empfangselementen für jeden Digitalisierungsschritt erfolgt. Dadurch wird eine Verbesserung der Schallenergie und der Auflösung für Phased Array-Anwendungen für verschiedene Defekttiefen "On-the-Fly" mit einer Aufnahme/einem Sendetakt bei einem kontinuierlichen Fokalgesetz, d. h. Änderung von Verzögerungswerten und Anzahl der Sende-/Empfangselemente oder optional durch Kombination verschiedener Fokalgesetze erreicht.

Die kontinuierliche Änderung der Verzögerungswerte und/oder Anzahl der Sende-/Empfangselemente für einen virtuellen Prüfkopf erfolgt während des Empfangs des HF-Signals durch ein geeignetes Firmware-Programm "On- the- Fly".

Insgesamt wird gegenüber dem Stand der Technik eine höhere Leistung und verbesserte Fehlererkennung bei reduzierten Prüfkosten erreicht.

Durch das erfindungsgemäße Verfahren kann eine dynamische Tiefenfokussierung (laufzeitgesteuerte Fokussierung) und dynamische Apertur-Adaption (laufzeitgesteuerte Empfangsapertur) des Empfangsteils einer Phased-Array-Anwendung durchgeführt werden. Das Fokalgesetz bzw. die Verzögerungswerte und die Anzahl von Sende-/Empfangselementen des virtuellen Prüfkopfes werden von einem Digitalisierungsschritt zum nächsten geändert.

Gemäß einer bevorzugten Verfahrensweise werden die Verzögerungswerte von einer gespeicherten Startverzögerung (Fokalgesetz für Oberflächenposition) bis zu einer Endverzögerung (Fokalgesetz für Rückwandposition) mittels einer Abstandsfunktion 1/R mit R = Radius berechnet.

Optional können die Verzögerungswerte in einer Verweistabelle gespeichert werden, insbesondere bei komplexer Kohärenz.

Eine weitere Verfahrensweise zeichnet sich dadurch aus, dass eine Apertur-Adaption durch lineare Änderung der Startelemente des virtuellen Prüfkopfes zu der Anzahl der Endelemente erfolgt.

Der Start der Apertur-Änderung kann mit der "Time-of-Flight" -Position des Oberflächen-Interface-Echos getriggert werden.

Ein weiterer Verfahrensschritt zeichnet sich dadurch aus, dass die Aufsummierung von verschiedenen fokussierten Transmitter-Shots zu einem Signal durch Verwendung einer digitalen TGC-Funktion erfolgt. Dabei ist vorgesehen, dass die bei der Zusammensetzung von in verschiedenen Tiefen fokussierten Transmitter-Shots zu einem Signal beim Zonenübergang auftretenden Empfindlichkeitsunterschiede durch Verwendung einer digitalen TGC-Funktion ausgeglichen werden.

Gemäß einem eigenständigen Erfindungsgedanken bezieht sich die Erfindung des weiteren auf ein Verfahren und eine Vorrichtung zur Definition von Zeitverzögerungen für Phased Array-Prüfköpfe durch funktionale Abhängigkeiten wie beispielsweise mittels einer BEZIER-Funktion, eine Polynominal- oder anderer Art von Funktionen. Die Funktion übernimmt die Indizes des Ultraschallwandlerelementes als Argument und gibt die Verzögerung als Ergebnis aus, während die Parameter in Abhängigkeit von der Anwendung gesetzt werden.

Eine weitere Eigenschaft der Erfindung besteht darin, dass alle oben genannten erfindungsgemäßen Verfahren in beliebiger Form miteinander kombiniert oder hintereinander ausgeführt werden können.

Es ist darüber hinaus Gegenstand der Erfindung, dass die von den Ultraschallwandlern aufgenommenen, digitalisierten Signale in einem geeigneten elektronischen Baustein gespeichert werden. Zur Erweiterung der Auswertung, beispielsweise in oben genannter Form, können dann die gespeicherten Daten herangezogen werden.

Bei dein Stand der Technik besteht das Problem, dass die Anzahl von anwendbaren Verzögerungs-Sets für die Anordnungen letztendlich durch die Kapazität der Hardware und die Verarbeitungszeiten für den Datentransfer begrenzt ist. Mit größerer Anzahl von Elementen und zusätzlichen Zonen, die zu prüfen sind, steigt der Bedarf an Speicheiplatz.

Zusätzlich benötigt die Zone für variierende Verzögerungsgesetze eine spezielle Behandlung, damit innerhalb der durch die Ultraschallvorrichtung produzierten Bilder keine Diskontinuität auftritt. Um dies zu überwinden, berechnen moderne Instrumente die Verzögerung basierend auf einem Abstands-Algorhythmus für sehr kleine Zonen oder für jeden abgetasteten Punkt. Dieser Abstands-Algorhythmus ist nur für hinreichend homogene Medien ohne starke Diskontinuitäten geeignet, wie diese bei der zerstörungsfreien Prüfung üblich sind. Bei der Abstandberechnung wurden bereits feste Beziehungen verwendet, wobei jedoch eine signifikant höhere Anzahl von Parametern benötigt wurde.

Gemäß dem hier beschriebenen eigenerfinderischen Gedanken wird dieses Problem durch die Anwendung funktionaler Beschreibungen für die verzögerungserzeugenden Schaltkreise gelöst. Die Verzögerungen, die im Allgemeinen für Ultraschallprobleme verwendet werden, können durch eine statische und differentielle Funktion zwischen dem ersten Element der Anordnung und dem letzten Element der Anordnung definiert werden. Die funktionalen Beschreibungen erlauben die Erzeugung einer Kurve für die Verzögerungen von allen Elementen, wobei der Verzögerungswert eine Funktion der Anordnungsnummer ist. Für eine 1-dimensionale Anordnungen ist dies eine Funktion mit einer Variablen, für 2-dimensionale Anordnungen ist es eine Funktion von mindestens zwei Variablen usw.

Die funktionale Beschreibung enthält des Weiteren eine begrenzte Anzahl von Parametern. Diese Parameter ändern sich für jede der gewählten Verzögerungszone und sind individuell anzupassen.

Ein 1-dimensionaler virtueller Prüfkopf mit 32 Transmitter-/Reveiver-Elementen zum Beispiel benötigt für eine zweite Zone 64 Verzögerungswerte. Wird eine funktionale Beschreibung in Form einer kubischen BEZIER-Funktion angewendet, kann die Anzahl der benötigten Parameter für eine zweite Zone auf 8 Werte reduziert werden: 4 Werte für Aussendung und vier Werte für Empfang.

Um den Übergang zwischen den Verzögerungszonen zu glätten, können lineare Interpolationen zwischen den funktional beschriebenen Werten von zwei Zonen in Abhängigkeit von der Zeitdifferenz zwischen der aktuell betrachteten Abtastung und zwei Referenz-Zeit-Positionen erfolgen. Dasselbe Schema kann für die Apodisierung bzw. die Überlappungswichtung angewendet werden. Hier ist das Ergebnis der funktionalen Beschreibung die Amplitude für das Element der Anordnung. Das Argument ist das Element selbst und die Parameter werden innerhalb des Ultraschallsystems übertragen bzw. für höher-dimensionale Fälle vorab berechnet und in einer Tabelle zur Übertragung abgelegt.

Durch die erfindungsgemäße Lösung werden gegenüber dem Stand der Technik die Vorteile erreicht, dass beträchtlich weniger Parameter zu übertragen sind, so dass weniger Speicherplatz benötigt wird. Auch die Anzahl der Zyklen kann vergrößert werden, eine Adaption zu hoch komplexen geometrischen Situationen ist gleichfalls möglich.

Zusammenfassend zeichnet sich das erfindungsgemäße Verfahren dadurch aus, dass parametrisierbare Funktionen für die Verzögerungs-Zonen anstelle von feststehenden Formeln oder Verzögerungs-Sets eingesetzt werden.

Nach einem weiteren eigenerfinderischen Gedanken bezieht sich die Erfindung auf eine Verwendung eines 2-dimensionalen Phased Array Prüfkopfes und eine Prüfkopfhalterung zur Prüfung von plattenförmigem Material wie Dünn- oder Dickblechen. Hierzu wird ein 2-dimensionales Phased Array unter Verwendung von dynamischer Tiefenfokussierung und dynamischer Tiefenapertur zur Verbesserung von Signalqualität und Auflösung eingesetzt.

Im Stand der Technik werden Dual-Kontakt-Prüfköpfe mit Wasserfilmkopplung und Kunststoff-Interface verwendet. Jeder von bis zu 100 Prüfköpfen muss einzeln abgesetzt werden, was einen hohen Aufwand von Steuerungstechnik erfordert. Zusätzlich müssen die Prüfköpfe routinemäßig auf eine geeignete Ultraschallkopplungsqualität überprüft werden.

Da jeder Prüfkopf nur dann arbeiten kann, wenn dieser vollständig von der zu testenden Platte abgedeckt ist, haben Plattenränder ein nicht überprüftes Zonenminimum, welches so breit ist, wie die Breite des einzelnen Prüfkopfes. Diese Breite liegt momentan im Bereich von 50 mm.

Davon ausgehend liegt dem weiteren Erfindungsgedanken die Aufgabe zu Grunde, eine Vorrichtung zur Prüfung von flächigem Material wie Dünn- oder Dickblech derart weiterzubilden, dass eine gleichförmige Empfindlichkeit über einen weiten Dickenbereich erreicht wird. Ferner soll die Vorrichtung dahingehend verbessert werden, dass keine beweglichen Teile erforderlich sind und diese geeignet ist, ohne zusätzliches Equipment die flächigen Materialien randnah zu testen. Eine neue und erfinderische Verwendung eines Phased Arrays wird vorgeschlagen.

Zur Lösung der Aufgabe ist vorgesehen, dass ein 2-dimensionaler Phased Array - Prüfkopf unter Verwendung von dynamischer Tiefenfokussierung und dynamischer Apertur-Anpassung zur Verbesserung von Signalqualität und Auflösung eingesetzt wird. Das mechanische Design von Prüfkopf und Prüfkopfhalter wird durch eine Ultraschalleinkopplung über Segmenttauchtechnik vereinfacht.

Durch Einsatz von Matrix-Array-Tastköpfen, die individuell auf einzelnen Dickenzonen programmierbar sind, kann die schlechte Auflösung von herkömmlichen Tauchtechniktastköpfen überwunden werden.

Die Tauchtechnik erlaubt gegenüber der üblichen Wasserspalt-Technik eine viel einfachere mechanische Lösung und erfordert keine zusätzlichen den Kanten folgende Tastköpfe, um eine Überprüfung nahe der Plattenkanten zu ermöglichen.

Gegenüber dem Stand der Technik wird eine starke mechanische Vereinfachung und höhere Auflösung von Störstellen erreicht. Zusätzlich ist die örtliche Tauchtechnik weniger empfindlich gegenüber Unebenheiten an der Oberfläche des zu prüfenden Materials.

Das Verfahren und die Vorrichtung ist geeignet, Dünn- bzw. Dickbleche im Dickenbereich von 4 bis 400 mm zu prüfen.

Die Pixelierung über eine Plattenbreite liegt üblicherweise zwischen 12 und 17 mm, wohingegen mit der erfindungsgemäßen Technologie 4 bis 8 mm erreicht werden können.

Es zeigen:
- Fig. 1: ein Blockschaltbild einer Steuereinheit für Phased Array Prüfköpfe,
- Fig. 2a) - d): eine schematische Darstellung einer Draufsicht auf einen Prüfkopf im Sende- und Empfangszustand,
- Fig. 3: eine schematische Darstellung eines Prüfkopfes mit verschiedenen Prüftakten,
- Fig. 4a), b): eine schematische Darstellung eines Prüfkopfes oberhalb einer nicht idealen Einschaltgeometrie sowie Abbildung eines parallelen B-Scans,
- Fig. 5: eine schematische Darstellung einer ersten Ausführungsform einer Prüfkopfanordnung in lokaler Immersion zur Prüfung eines flächigen Materials von unten,
- Fig. 6: eine Draufsicht der Prüfkopfanordnung gemäß Fig. 5,
- Fig. 7a) - e): eine schematische Darstellung einer Draufsicht auf einen Prüfkopf im Sende- und Empfangszustand,
- Fig. 8: eine schematische Darstellung eines Prüfkopfes mit verschiedenen Prüftakten,
- Fig. 9a), b): eine Seitenansicht einer Prüfkopfleiste sowie eine Draufsicht einer Prüfkopfleiste,
- Fig. 10: eine Vorderansicht einer zweiten Ausführungsform einer Prüfkopfanordnung in Form eines Prüfkopfbalkens,
- Fig. 11: eine Seitenansicht des Prüfkopfbalkens gemäß Fig. 7 und
- Fig. 12: eine Seitenansicht einer weiteren Ausführungsform eines Prüfkopfbalkens.

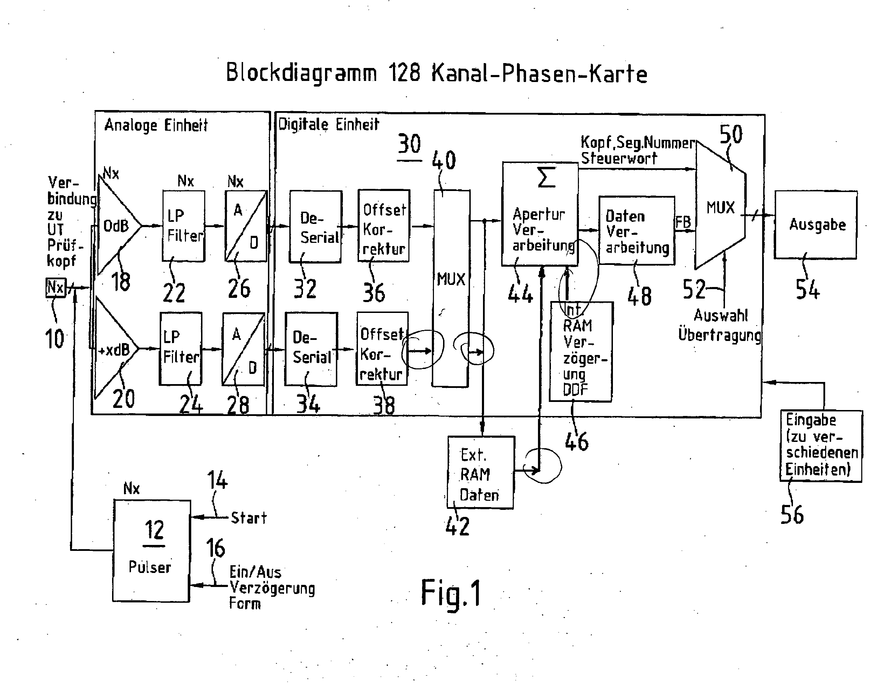

Fig. 1 zeigt ein Blockschaltbild einer vorzugsweise N = 128 Kanäle umfassenden Steuereinheit. Für jedes der bis zu N = 128 Ultraschallwandlerelemente 10 ist ein Pulsgeber 12 vorgesehen, welcher über einen Eingang 14 ansteuerbar ist. Über einen weiteren Eingang 16 kann eine Verzögerungszeit von beispielsweise 5 ns ein- oder ausgeschaltet werden. Die von den Ultraschallwandlerelementen 10 empfangenen Signale werden zweikanalig erfasst, wobei jeder Kanal einen Operationsverstärker 18, 20, einen Tiefpassfilter 22, 24 sowie einen A/D-Wandler 26, 28 umfasst. Die Operationsverstärker 18, 20 der einzelnen Kanäle weisen unterschiedliche Verstärkung auf. Die A/D-Wandler sind mit ihrem Digitalausgang, d. h. mit einem programmierbaren integrierten Schaltkreis 30 verbunden. Der Digitalausgang der A/D-Wandler 26, 28 ist mit einem Eingang eines De-Serial-Bausteins 32, 34 verbunden. Ein Ausgang des De-Serial-Bausteins ist mit dem Eingang eines Offset-Korrektur-Bausteins 36, 38 verbunden, dessen Ausgänge mit einem Multiplexer 40 verbunden sind. Der Multiplexer 40 ist ausgangsseitig mit einem externen Speicherbaustein 42 wie RAM und mit einer Verarbeitungseinheit 44 verbunden.

In der Verarbeitungseinheit 44 erfolgen eine Kanalsetektion und ebenfalls eine dynamische Tiefenfokussierung sowie eine dynamische Apertur-Anpassung. Als Verzögerungszeit ist beispielsweise 5 ns vorgesehen. Ein Ausgang des externen Speicherbausteins 42 ist mit der Apertur-Verarbeitungseinheit 44 verbunden. Ferner ist ein interner Speicherbaustein 46 vorgesehen, der ebenfalls mit der Apertur-Verarbeitungseinheit 44 verbunden ist.

Ein Ausgang der ein Summierglied aufweisenden Einheit 44 ist mit einem Prozessor 48 verbunden, in dem in digitaler Weise die Verstärkung, Filterung, Zeitsteuerungsverstärkung eine Echtzeit HF-Amplitudenskalierung durchgeführt wird. Am Ausgang des Prozessors 48 wird ein Signal übertragen, welches an einen ersten Eingang 52.1 eines Multiplexers 50 angelegt wird. An einen zweiten Eingang 52.2 des Multiplexers kann ein Header, eine Sequenznummer oder ein Steuerword angelegt werden. Über einen dritten Eingang 52.3 kann der jeweilige Eingang ausgewählt werden. Am Ausgang des Multiplexers 50 liegt beispielsweise ein 17 Bit Signal an, welches über eine schnelle serielle Verbindung (fast serial link) 54 zur weiteren Verarbeitung zur Verfügung gestellt wird. Weiterer Bestandteil der Schaltung ist ein Eingabe-Baustein 56 zur Eingabe von Signalen an verschiedene Einheiten des Schaltkreises 30.

Das erfindungsgemäße Verfahren wird wie folgt ausgeführt. Zunächst wird über die Pulsgeneratoren 12 eine komplette Wellenfront durch gleichzeitige (phasenstarre) Ansteuerung aller Ultraschallwandlerelemente senkrecht auf zumindest einen zu prüfenden Abschnitt eines Gegenstandes ausgesendet. Anschließend wird eine von der Struktur des Gegenstandes reflektierte Welle mittels einer Vielzahl voneinander unabhängiger Ultraschallwandlerelemente 10 empfangen. Die von den Ultraschallwandlerelementen 10 empfangenen Signale werden in einer digitalen Signalverarbeitungseinheit 30 in Digitalisierungsschritten digitalisiert, elektronisch verarbeitet und in dein Speicherbaustein 44 oder 46 gespeichert.

Dabei erfolgt eine kontinuierliche Änderung von Verzögerungswerten und/oder der Anzahl von Ultraschallwandlerelementen eines virtuellen Prüfkopfes für jeden Digitalisierungsschritt on-the-fly, da für jeden Digitalisierungsschritt on-the-fly die Verzögerungswerte und/oder Anzahl von Ultraschallwandlerelementen angepasst werden. Die Verzögerungswerte werden von einer gespeicherten Startverzögerung (Fokalgesetz für die Oberflächenposition) bis zu einer Endverzögerung (Fokalgesetz für eine Rückwändposition) mittels einer Abstandsfunktion wie beispielsweise 1/R mit R= Radius berechnet. Die Verzögerungswerte können in einer Verweistabelle gespeichert sein, insbesondere bei komplexer Kohärenz. Im vorliegenden Fall werden die Verzögerungswerte in Form einer Kurve abgelegt.

Die Apertur-Adaption erfolgt durch lineare Änderung der Anzahl der Empfangselemente, vorzugsweise in dem Summierglied 44.

Üblicherweise wird eine starke Änderung der Verzögerungswerte und/oder Apertur-Adation durch die "Time-Of-Flight"-Position (Laufzeit-Position) des Oberflächen-Interface-Echos getriggert. In dem Summierbaustein 44 erfolgt eine Aufsummierung von verschiedenen fokussierten Transmitter-Shots zu einem Signal durch Verwendung einer digitalen TGC-Funktion. Ergänzend können die Verzögerungswerte durch funktionale Abhängigkeiten mittels beispielsweise einer BEZIER-Funktion, polynominal oder anderer Art von Funktion definiert werden, wobei die Funktionsindizes der Ultraschallwandlerelemente als Argument verwendet und die Verzögerungswerte als Ergebnisse ausgegeben werden, während Parameter in Abhängigkeit von der Anwendung gesetzt werden.

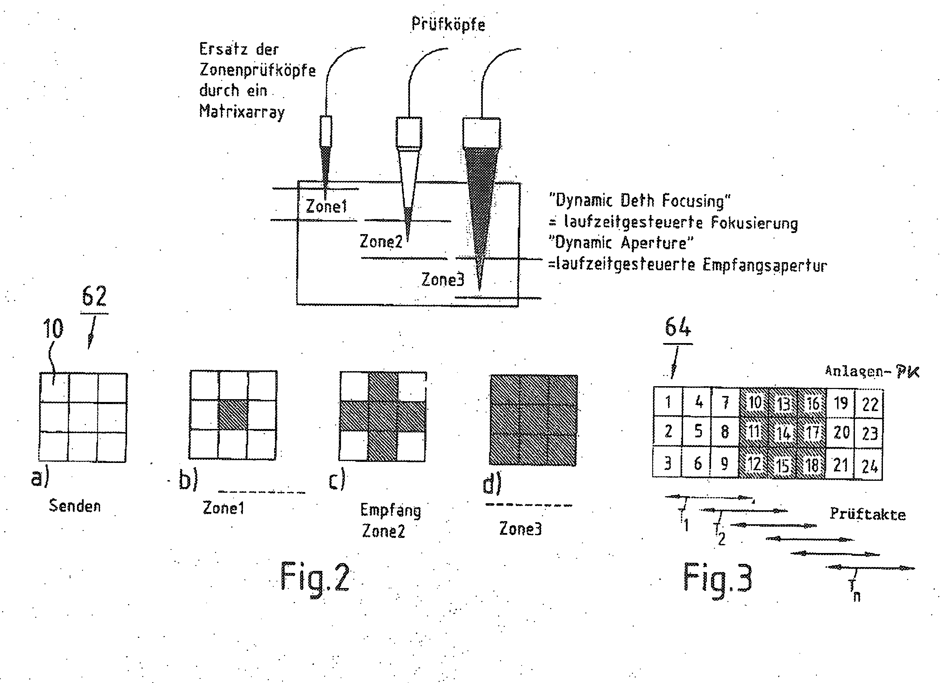

In den Fig. 2a bis 2d sind rein schematisch Draufsichten eines Prüfkopfes 62 in Form eines Matrix-Phased-Array-Prüfkopfes dargestellt. Dieser besteht aus einer Vielzahl von einzelnen Ultraschallwandlerelementen 10, die individuell ansteuerbar sind.

Wie bereits zuvor erläutert, werden zum Senden alle Ultraschallwandlerelemente 10 gleichzeitig angesteuert, wie in Fig. 2a dargestellt ist.

Nach dem Prinzip der laufzeitgesteuerten Fokussierung (dynamic depth focussing) sowie der laufzeitgesteuerten Empfangs-Apertur (dynamic aperture) werden in den Fig. 2b bis 2d für zu interessierende Fokuszonen ein Element, wie in Fig. 2b, fünf Elemente, wie in Fig. 2c oder neun Elemente wie in Fig. 2d auf Empfang geschaltet, um Zonen verschiedener Tiefen zu fokussieren.

Jeder Prüfkopf 62 kann beispielsweise 128 Ultraschallwandlerelemente 10 aufweisen. Vorzugsweise werden Prüfköpfe mit 5 x 25 = 125 Elementen eingesetzt, wodurch eine aktive Fläche beispielhaft im Bereich von 35 mm x 175 mm erreicht wird.

Um Blechbreiten im Bereich von 1000 mm bis 5300 mm abzudecken, sind ca. 36 Prüfköpfe 62 erforderlich.

Ein Anlagenprüfkopf 64 mit 24 Elementen ist in Fig. 3 dargestellt, wobei entsprechend des Anlagenprüftaktes T1...Tn jeweils neun Ultraschallwandlerelemente 10 schrittweise eingeschaltet und auf Empfang geschaltet werden.

Durch das erfindungsgemäße Verfahren wird gegenüber der herkömmlichen Aufsatztechnik eine größere Ankopplungssicherheit bei rauen Oberflächen erreicht. Ferner können alle Prüfköpfe lückenlos über die gesamte Blechbreite angeordnet werden, bei einer Breitenpixelierung von beispielsweise 6 mm. Kanten- und Kopf-/Fußprüfung sind in dem Konzept integriert. Auch können höherwertige Rekonstruktionsverfahren durch frühzeitige Digitalisierung sämtlicher Prüfdaten eingebunden werden. Ferner wird das Parallel-B-Scan-Prinzip ermöglicht, d. h. Senden und Empfangen aller Ultraschallwandlerelemente gleichzeitig.

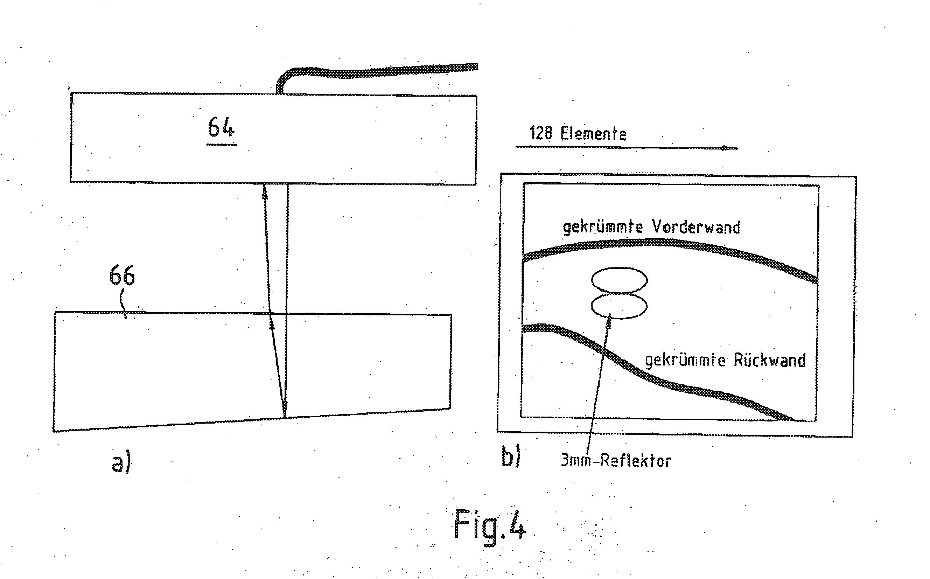

Durch das Parallel-B-Scan-Verfahren wird eine robuste Prüfung auch an nicht idealen Einschallgeometrien 66, wie diese in Fig. 4a dargestellt ist, ermöglicht. Die nicht ideale Einschaltgeometrie 66 kann beispielsweise eine gekrümmte Vorderwand und/oder gekrümmte Rückwand aufweisen, wie dies in Fig. 4b dargestellt ist.

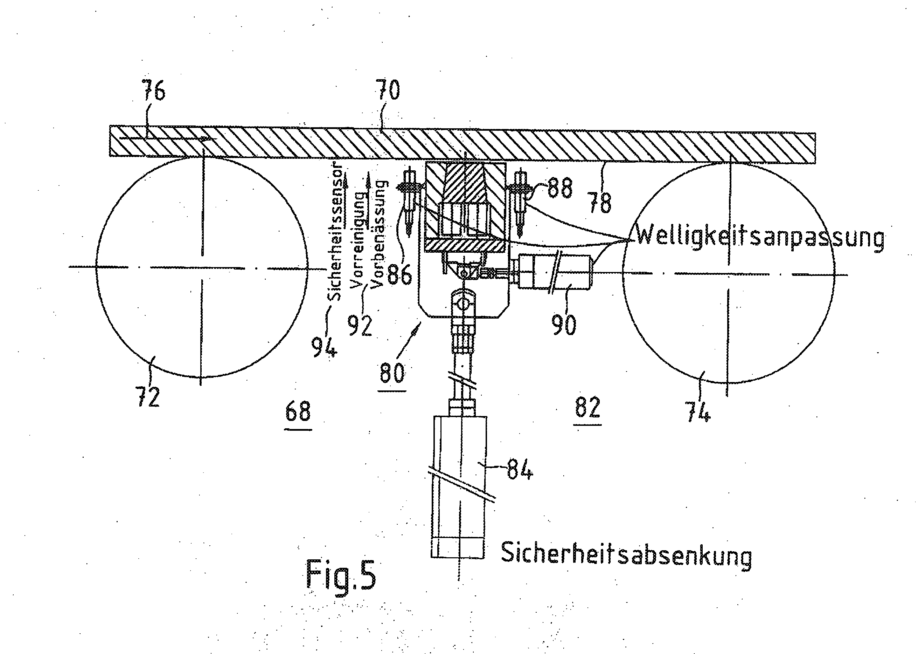

Eine erste Ausführungsform einer Prüfanordnung 68 ist in Fig. 5 in Seitenansicht dargestellt. Ein zu prüfender Gegen-stand 70 in Form eines flächigen Materials wie Dünnblech oder Dickblech ist auf Transportrollen 72, 74 gelagert und in Richtung des Pfeils 76 transportierbar. An einer Unterseite 78 des zu prüfenden Materials 70 ist eine Prüfkopfanordnung 80 vorgesehen, mittels der die einzelnen Prüfköpfe PK1 - PKn über eine Segmenttechnik an das zu prüfende Material 70 angekoppelt werden. Die Prüfkopfanordnung 80 ist als nach oben offene Wasserkammer ausgebildet, die über einen ständigen Wasserzulauf den Wasserverlust, der im Spalt zum prüfenden Gegenstand 70 entsteht, ausgleicht und somit eine einwandfreie Ankopplung des Ultraschalls sicherstellt. Die Prüfkopfanordnung 80 ist vorzugsweise mit einer Lippendichtung zur Unterseite 78 des zu prüfenden Materials abgedichtet, um den Wasserverlust zu reduzieren. Alternativ können auch An- und Auslaufgleitschuhe in Bewegungsrichtung 76 des Prüflings 70 vorgesehen werden, um bei zu großer Unebenheit des Prüflings die Prüfkopfanordnung 80 vor Beschädigung zu schützen. Die Prüfkopfanordnung 80 kann über ein Stellglied 84 abgesenkt und mit weiteren Stellgliedern 86, 88, 90 zur Welligkeitsanpassung dynamisch nachjustiert werden. Der Prüfkopfanordnung 80 vorgelagert ist eine Vorreinigung bzw. Vorbenetzung 92 sowie ein Sicherheitssensor 94, der im Fehlerfall für eine Abschaltung sorgt.

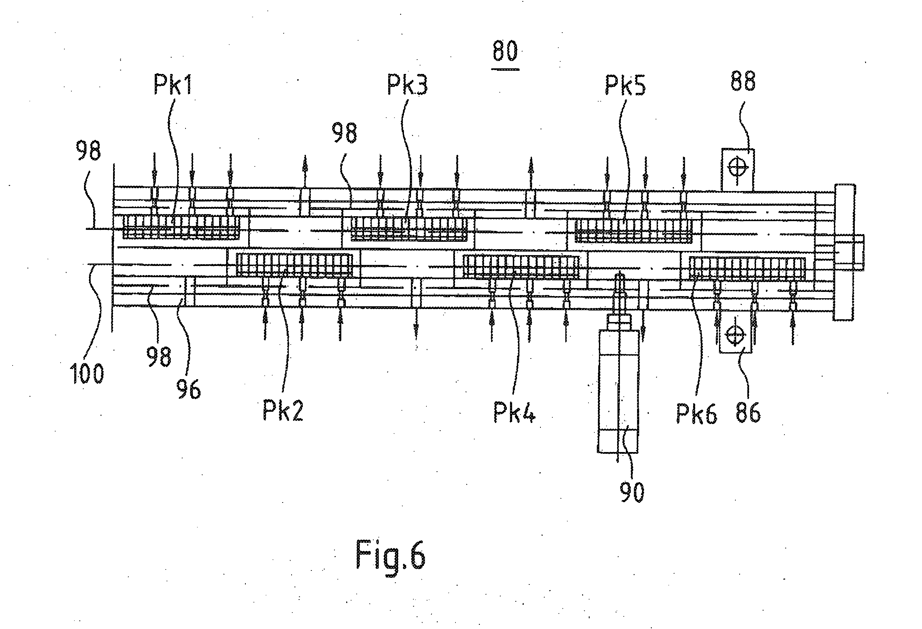

Fig. 6 zeigt eine Draufsicht der Prüfkopfanordnung 80, wobei einzelne Prüfköpfe PK1-PK6 bzw. PKn innerhalb eines Wasserbeckens 96 angeordnet sind. Das Wasserbecken ist mittels eines vorzugsweise umlaufenden Dichtelementes 98 wie Lippendichtung zur Unterseite 78 des zu prüfenden Materials 70 abgedichtet. Dabei sind die Prüfköpfe PK1, PK3, PK5 entlang einer ersten Längsachse 98 mit Abstand zueinander angeordnet, wobei entlang einer parallel zu der ersten Achse verlaufenden zweiten Achse 100 die Prüfköpfe PK2, PK4, PK6 derart angeordnet sind, dass diese versetzt zu den Prüfköpfen PK1, PK3, PK5 verlaufen. Auf diese Weise wird eine Gesamtbreite B des zu überprüfenden Bereichs durch Ultraschallwandlerelemente abgedeckt. Jeder einzelne der Ultraschallköpfe Pk i ist hierbei jeweils mit einer der Ultraschallsteuereinheiten i (gemäß Fig. 1) verbunden. Auf diese Weise kann die Prüfung gleichzeitig parallel mit jedem einzelnen Prüfkopf durchgeführt und somit die Prüfleitung erhöht werden. Innerhalb eines Prüfkopfes wird je nach Prüfanforderung mit einer Gruppe von vorzugsweise 5 x 5 Elementen des Matrixprüfkopfes auf die Rückwand des Prüflings fokussiert gesendet. Die Auswertung der gleichen Empfangsgruppe erfolgt dann je nach Tiefenzone über die beschriebene dynamische Aperturanpassung durch die Auswahl der entsprechenden Empfangselemente und/oder eine dynamische Tiefenfokussierung über die Anpassung der Verzögerungszeiten. Zur Abdeckung der gesamten Prüfkopffläche wird dann die beschriebene Gruppe im nächsten Ultraschallschuss ein Matrixelement weiter in Prüfkopflängsrichtung getaktet bis die gesamte Prüfkopfapertur abgetastet wurde. Alternativ hierzu kann auch in einem weiteren Prüfmodus die sendeseitige Apertur (z. B. nur das mittlere Element oder eine 3 x 3 Elementgruppe) mit entsprechender Fokussierung angesteuert und das gespeicherte empfangene Ultraschallsignal aus den unterschiedlichen Sendeschüssen entsprechend der Tiefenzone zusammengesetzt wiederum mit Aperturund Fokussierungsanpassung ausgewertet werden. Ein weiterer Prüfmodus besteht in einem Sendeschuss der gesamten Apertur des Prüfkopfes (z. B. 5 x 25 Matrixelemente) mit einer linienförmigen Fokussierung auf die Rückwand des Prüflings und einer Auswertung der gespeicherten Empfangssignale entsprechend des eingangs beschriebenen Verfahrens des Durchtaktens einer 5 x 5 Elementgruppe.

Die Prüfkopfanordnung 80 ist in der Lage, eine 100 %ige Flächenprüfung unbesäumter Walztafeln im Produktionsfluss durchzuführen. Dabei können Prüfblechdimensionen mit Längen bis 30000 mm, Breiten von 1000 bis 5300 mm und Dicken im Bereich von 4 mm bis 300 mm behandelt bzw. überprüft werden.

Die Prüfung kann in einem Durchlauf erfolgen, insbesondere Flächen- und Randzonenprüfung, wobei diese längs und quer erfolgen können. Die Prüfgeschwindigkeit betragt ca. 0,5 m/sec bei 1000 Ultraschall-Schüssen /sec. Die Ankopplung erfolgt - wie oben erläutert - über Wasserspalte per Kreislaufwasserversorgung.

Das erfindungsgemäße Verfahren erlaubt eine sichere Detektion in Abhängigkeit von der Materialdicke, wobei bei einer Dicke von 8 mm bis 240 mm ERG 03 bis zu einem Abstand von 3 mm zu den Oberflächen und in einem Dickenbereich 240 mm bis 400 mm ERG 05 bis zu einem Abstand von 5 mm zu den Oberflächen sicher detektiert werden.

Insgesamt wird ein modularer Aufbau zur Steigerung der Funktionssicherheit, Verfügbarkeit und Wartungsfreundlichkeit angestrebt.

Da Verfahren kann beispielhaft unter folgenden Bedingungen verifiziert werden. Prüfverfahren: Pulsecho - Verfahren bei einem Wasserabstand von 80 mm

**Prüfkörper 1:**

| | |
|---|---|
| Material: | Kohlenstoffstahl |
| Abmessung: | Länge = 200 mm, Breite = 100 mm, |
| Dicke: | 280 mm |
| Prüfdefekte: | flache Sattellöcher, Durchmesser 3 oder 5 mm |

**Prüfkörper 2:**

| | |
|---|---|
| Material: | Kohlenstoffstahl |
| Abmessung: | Länge = 100 mm, Breite = 100 mm, |
| Dicke: | 20 mm |
| Prüfdefekte: | Sacklöcher, Durchmesser 3 oder 5 mm |

**Transducer (Prüfkopf 1):**

| | |
|---|---|
| Typ: | 2D-Face Array Transducer (18 Elemente) |
| Frequenz: | 4 MHz |
| Elementgröße: | 7 x 7 mm² |

**Transducer (Prüfkopf 2):**

| | |
|---|---|
| Typ: | 2D-Face Array Transducer (24 Elemente) |
| Frequenz: | 5 MHz |
| Elementgröße: | 6 x 6 mm². |

Das Schema des Matrix-Prüfkopfes entspricht dem in Fig. 3 dargestellten.

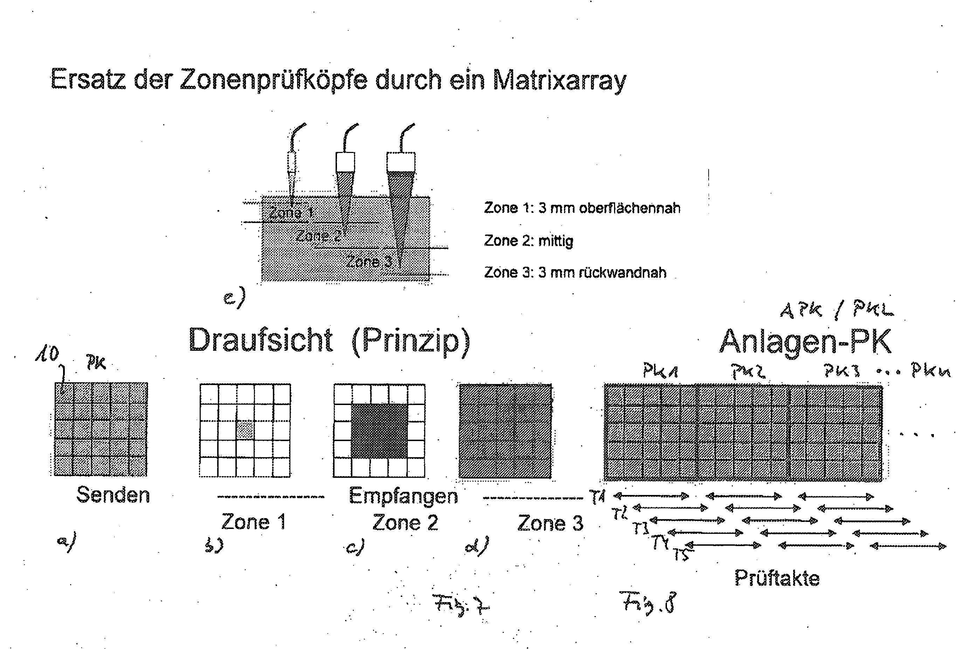

Ein weiters Schema eines Matrix-Prüfkopfes ist in Fig. 7 dargestellt. Gemäß Fig. 7a umfasst der Prüfkopf PK 5 x 5 = 25 einzelne Sende-/Empfangselemente 10. Das Prinzip der laufzeitgesteuerten Fokussierung (dynamic deep focussing) der laufzeitgesteuerten Empfangsapertur (dynamic aperture) ist den Fig. 7b) bis 7d) zu entnehmen. Entsprechend der Auswertung der Anzahl empfangener Ultraschallsignale eines Prüfkopfes PK können verschiedene Zonen (Zone 1, Zone 2, Zone 3) eines Prüfobjektes überprüft werden, wie dies in Fig. 7 e) rein schematisch dargestellt ist.

Fig. 8 zeigt beispielhaft eine lückenlose Aneinanderreihung einzelner Prüfköpfe PK1 ... PKn zu einem Anlagenprüfkopf APK bzw. einer Prüfkopfleiste PKL, welche sich wiederum durch eine lückenlose Aneinanderreihung von Anlagenprüfköpfen APK ergibt.

Nach dem Aussenden der Wellenfront durch sämtliche Prüfköpfe PK1 ... PKn werden alle Ultraschallempfänger 10 der Prüfköpfe PK1 ... PKn auf Empfang geschaltet, so dass die eingehenden Ultraschallsignale in Digitalisierungsschritten digitalisiert und abgespeichert werden können. Aufgrund der zeitlich einlaufenden Digitalisierung, wobei die Signale zu jedem Zeitpunkt digitalisiert werden, erhalten die Signale eine Tiefeninformation, die ausgewertet werden kann. In einem ersten Prüftakt T1 werden jeweils die 25 Einzelsignale eines jeden Prüfkopfe PK1 ... PKn "on-the-fly", d. h. noch während des Empfangs der Signale ausgewertet. In den weiteren Prüftakten T2 ... T5 erfolgt eine Auswertung bereits gespeicherter Ultraschallsignale, indem in einem "virtuellen Prüfkopf" weitergetaktet wird, unter Berücksichtigung einer kontinuierlichen Änderung von Verzögerungswerten und/oder der Anzahl von Empfangselementen für jeden Digitalisierungsschritt. Aufgrund der Digitalisierung der von den Empfangselementen empfangenen Signale in Digitalisierungsschritten erhält jeder abgespeicherte Wert auch eine Tiefeninformation, die auswertbar ist. Im dargestellten Ausführungsbeispiel mit Prüfköpfen PK mit 25 Sende-/Empfangselementen kann somit innerhalb von 5 Prüftakten eine Auswertung erfolgen.

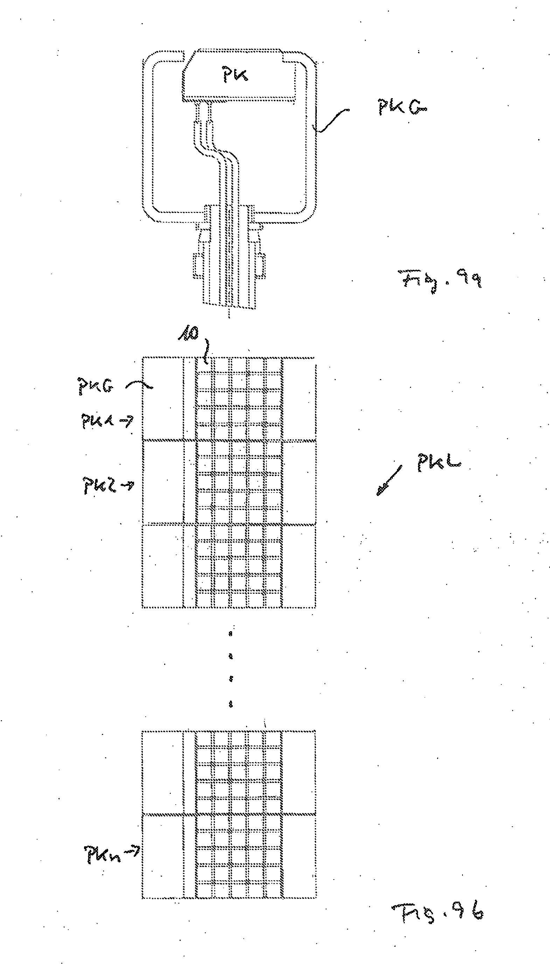

Ein einzelner Prüfkopf PK1 ... PKn besteht dabei aus beispielsweise 5 x 5 = 25 einzelnen Sende-/Empfangselementen 10 mit jeweils einer Abmessung von beispielsweise 6 x 6 mm. Somit ergeben sich Abmessungen für ein in Fig. 9a dargestelltes Prüfkopfgehäuse PKG im Bereich von ca. 35 mm x 34,8 mm bei 25 Sende-/Empfangselementen. Eine Prüfkopfleiste PKL ist in Fig. 9b dargestellt.

Bei einer Blechbreite von beispielsweise maximal 5350 mm und einer angenommenen Prüfkopfgehäusebreite bei 25 Sende-/Empfangselementen von 35 mm ergibt sich eine erforderliche Prüfkopfanzahl zur Blechbreitenabdeckung von 5350/35 = 153.

Unter der Annahme, dass je Steuereinheit SE 125 Kanäle zur Verfügung stehen, ergibt sich eine Prüfkopfanzahl von 5 je Elektronikeinheit. Für eine erforderliche Prüfkopfanzahl von 153 sind 31 Elektronikeinheiten notwendig.

Unter Verwendung von 31 Elektronikeinheiten, die je 5 Prüfköpfe verarbeiten können, ergibt sich eine maximale Prüfkopfanzahl von 155, woraus resultiert, dass eine Breitenabdeckung von 155 x 35 mm = 5425 mm möglich ist. Dies entspricht bei einer Blechbreite von 5350 mm einer Überlappung von 75 mm.

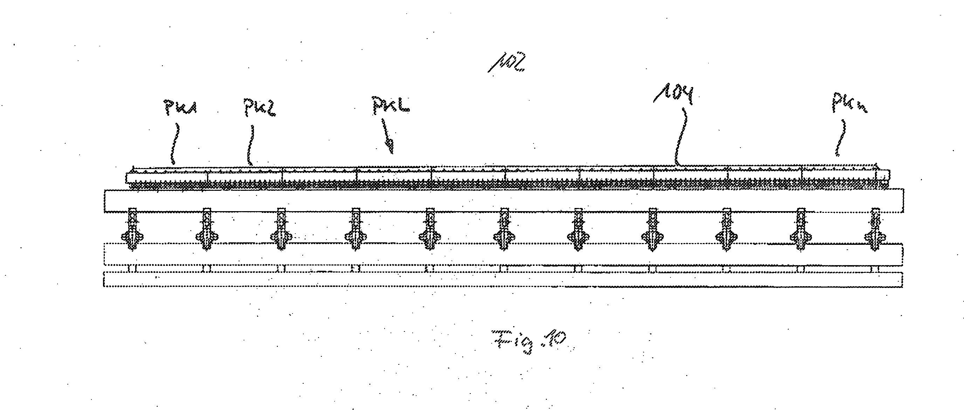

Fig. 10 zeigt eine Vorderansicht einer zweiten Ausführungsform einer Prüfanordnung 102 in Form eines Prüfkopfbalkens. Bei dieser Anordnung sind die Prüfköpfe PK1 ... PKn gemäß Fig. 9 als Prüfkopfleiste PK1 lückenlos aneinandergereiht, um die vollständige Prüfung eines flächigen Materials wie beispielsweise eines Bleches 104 zu ermöglichen.

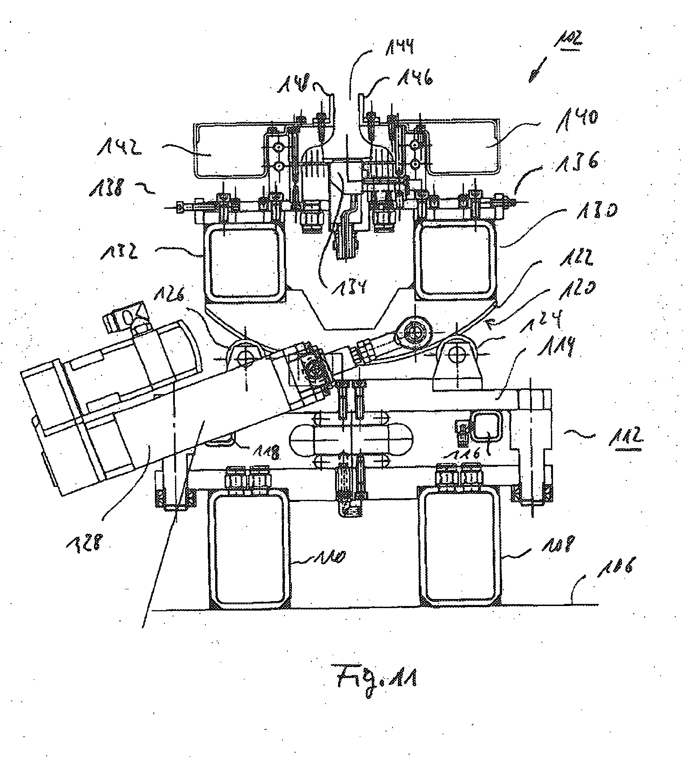

Eine Seitenansicht einer ersten Ausführungsform des Prüfkopfbalkens 102 ist in Fig. 11 dargestellt. Der Prüfkopfbalken 102 ist auf einer nicht näher beschriebenen stationären oder fahrbaren Abstützung 106 angeordnet. Auf dieser Abstützung verlaufen Träger 108, 110, die als Wasserzuführung ausgebildet sind. Auf den Trägern 108, 110 ist eine Hubeinrichtung 112 vorgesehen, über die der Prüfkopfbalken 102 an das zu prüfende Blech 104 anfahrbar ist. Die Hubeinrichtung kann pneumatisch ausgebildet sein und einen Hub von etwa 20 mm im ausgestellten Zustand aufweisen. Die Hubeinrichtung 112 umfasst eine höhenverstellbare Plattform 114, unter der Kanäle 116, 118 für die Luftzufuhr angeordnet sind.

In bevorzugter Ausführungsform ist der Prüfkopfbalken 102 mit einer Winkelverstelleinrichtung 120 ausgebildet, umfassend eine bogenförmige Wanne 122, welche auf Rollen 124, 126 schwenkbar gelagert und über einen Verstellmechanismus 128 einstellbar ist. Der Winkel kann im Bereich von +/- 5° eingestellt werden.

Die Wanne ist mit längslaufenden Trägern 130, 132 versehen, von denen die Prüfkopfleiste 134 sicher getragen wird. Für die Ausrichtung der Prüfkopfleiste 134, insbesondere bei Erstmontage, sind Justierelemente 136, 138 vorgesehen, die auf einer Oberseite der Träger 130, 132 abgestützt sind. Seitlich der Prüfkopfleiste 134 sind Sammelrinnen 140, 142 für abfließendes bzw. abgestreiftes Koppelwasser angeordnet. Oberhalb der Prüfkopfleiste ist ein Schlitz 144 zur Wasserankopplung ah das zu prüfende Material vorgesehen, der seitlich durch Gummiblenden 146, 158 begrenzt ist, die an einer Unterseite des zu prüfenden Materials anliegen.

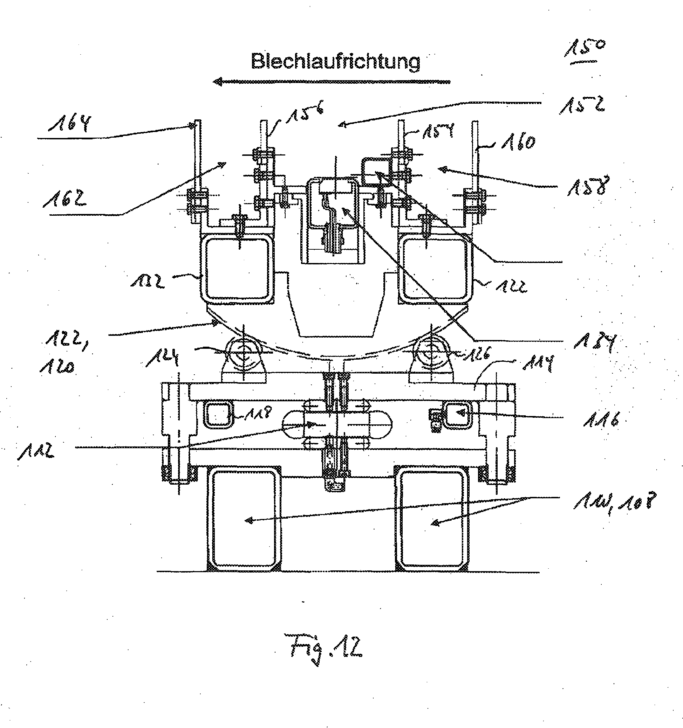

Fig. 12 zeigt eine weitere Ausführungsform eines Prüfkopfbalkens 150 in Seitenansicht, die im Wesentlichen der Ausführungsform gemäß Fig. 11 entspricht, so dass gleiche Elemente mit gleichen Bezugszeichen bezeichnet sind.

Bei dieser Ausführungsform mündet die Prüfkopfleiste 134 in einer Prüfwanne 152, die seitlich von Abstreif- und Dichtlippen 154, 156 begrenzt ist. Parallel zur der Prüfwanne ist in Richtung entgegen der Blechlaufrichtung eine Vorbenetzungs-Rinne 158 vorgesehen, mittels der das zu prüfende Material vorbenetzt wird. Die Rinne ist seitlich durch eine Abstreif- und Dichtlippe 160 sowie durch die Abstreif- und Dichtlippe 154 begrenzt.

In Blechlaufrichtung verläuft parallel zu der Prüfwanne 152 eine Sammelrinne 162, in der aus der Prüfwanne austretendes Wasser aufgenommen wird. Die Sammelrinne ist seitlich durch eine Abstreif- und Dichtlippe 164 sowie die Abstreif- und Dichtlippe 156 begrenzt.

## Patentansprüche

1. Verfahren zur Verarbeitung von Signalen, die bei der zerstörungsfreien Prüfung von Gegenständen wie Rohren, Stangen, Blechen oder ebenen wie auch komplex geformten Komponenten aus CFK, durch Reflexion von Ultraschallwellen an Fehlstellen der Struktur des Gegenstandes erzeugt werden, umfassend die Verfahrensschritte:
- Aussenden einer kompletten Wellenfront auf zumindest einen zu prüfenden Abschnitt des Gegenstandes durch phasenstarre Ansteuerung einer Vielzahl unabhängiger Sendeelemente (10) eines Matrix-Phased-Array-Prüfkopfes (62)
- Empfangen einer von der Struktur des Gegenstandes reflektierten Welle mittels einer Vielzahl voneinander unabhängiger Empfangselemente (10) mit einer Aufnahme,
- Digitalisieren und Speichern der von den Empfangselementen (10) während einer Aufnahme empfangenen Signale in Digitalisierungsschritten in einem Speicherbaustein (42, 46),
- Auslesen der für jeden Digitalisierungsschritt gespeicherten Signalwerte einer Aufnahme aus dem Speicherbaustein (42, 46) während des weiteren Empfangs (on-the-fly) und kontinuierliche Änderung von Verzögerungswerten und/oder der Anzahl von Empfangselementen (10) für jeden Digitalisierungsschritt der ausgelesenen Signalwerte.

2. Verfahren nach Anspruch 1,
**dadurch gekennzeichnet,**
**dass** die Verzögerungswerte von einer gespeicherten Startverzögerung (Fokalgesetz für die Oberflächenposition) bis zu einer Endverzögerung (Fokalgesetz für die Rückwandposition) mittels einer Abstandsfunktion 1/R mit R = Radius berechnet werden.

3. Verfahren nach Anspruch 1 oder 2,
**dadurch gekennzeichnet,**
**dass** die Verzögerungswerte in einer Verweistabelle gespeichert sind, insbesondere bei komplexer Kohärenz.

4. Verfahren nach zumindest einem der vorhergehenden Ansprüche,
**dadurch gekennzeichnet,**
**dass** eine Apertur-Adaption durch lineare Änderung der Anzahl der Empfangselemente (10) erfolgt.

5. Verfahren nach zumindest einem der vorhergehenden Ansprüche,
**dadurch gekennzeichnet,**
**dass** ein Start der Änderung der Verzögerungswerte und/oder Apertur-Adaption durch die "Time-of-Flight"-Position des Oberflächen-Interface-Echos getriggert wird.

6. Verfahren nach zumindest einem der vorhergehenden Ansprüche,
**dadurch gekennzeichnet,**
**dass** eine Aufsummierung von verschiedenen fokussierten Transmitter-Shots zu einem Signal durch Verwendung einer digitalen TGC-Funktion erfolgt.

7. Verfahren nach zumindest einem der vorhergehenden Ansprüche,
**dadurch gekennzeichnet,**
**dass** Verzögerungswerte durch funktionale Abhängigkeiten wie Terme einer Bezier-Funktion, Polynominal- oder anderer Art von Funktion definiert werden,
wobei die Funktion Element-Indizes als Argument verwendet und die Verzögerungswerte als Ergebnis ausgibt, während Parameter in Abhängigkeit von der Anwendung gesetzt werden

8. Verfahren nach zumindest einem der vorhergehenden Ansprüche,
**dadurch gekennzeichnet,**
**dass** Verzögerungswerte durch Linearkombination einer oder mehrerer Instanzen einer Methode oder durch Linearkombination verschiedener Instanzen mehrerer der genannten Methoden erzeugt werden.

9. Verfahren nach zumindest einem der vorhergehenden Ansprüche,
**dadurch gekennzeichnet,**
**dass** die Daten auf einem elektronischen Speicherbaustein (42, 46) zwischengespeichert werden und dann gemäß einem der vorhergehenden Ansprüche verarbeitet werd

## Claims

1. A method for processing signals generated by the reflection of ultrasonic waves on defects of the structure of an object during the non-destructive testing of objects, such as pipes, bars, metal sheets or CFRP components of a planar or complex shape, the method comprising:
- emitting a complete wavefront onto at least one section to be tested of the object by means of a phase-fixed control of a plurality of independent emission elements (10) of a matrix phased array test probe (62),
- receiving a wave reflected by the structure of the object by means of a plurality of receiver elements (10) that are independent of one another with a recording,
- digitizing and storing in a memory element (42, 46) the signals received by the receiver elements (10) during a recording in digitalization steps,
- reading out from the memory element (42, 46) the signal values of a recording stored for each digitalization step during the further reception (on-the-fly) and continuously modifying delay values and/or the number of receiver elements (10) for each digitalization step of the read-out signal values.

2. The method according to claim 1,
**characterised in that**
the delay values of a stored start delay (focal law for the surface position) up to an end delay (focal law for the rear wall position) are calculated by means of a distance function 1/R with R=radius.

3. The method according to claim 1 or 2,
**characterised in that**
the delay values are stored in a reference table, particularly in the case of complex coherence.

4. The method according to at least one of the preceding claims,
**characterised in that**
an aperture-adaptation is effected by linear modification of the number of receiver elements (10).

5. The method according to at least one of the preceding claims,
**characterised in that**
a start of the modification of the delay values and/or aperture-adaptation is triggered by the "time-of-flight" position of the surface-interface-echo.

6. The method according to at least one of the preceding claims,
**characterised in that**
a summation of different focused transmitter-shots for one signal is effected by using a digital TGC-function.

7. The method according to at least one of the preceding claims,
**characterised in that**
delay values are defined by functional dependencies, such as terms of a Bezier function, polynomial or another type of function, wherein the function uses element-indices as an argument and outputs the delay values as a result, while parameters are set depending on the application.

8. The method according to at least one of the preceding claims,
**characterised in that**
delay values are generated by a linear combination of one or several instances of a method or by linear combination of different instances of several of the methods mentioned.

9. The method according to at least one of the preceding claims,
**characterised in that**
the data are buffered in an electronic memory element (42, 46) and are then processed according to any one of the preceding claims.

## Revendications

1. Procédé de traitement de signaux qui sont générés dans le contrôle non destructif d'objets tels que des tuyaux, tiges, tôles ou de composants plats et aussi de forme complexe en CFRP, par la réflexion d'ondes ultrasonores sur des vices de matière de la structure de l'objet, comprenant les étapes de procédé consistant à:
- émettre un front d'onde complet sur au moins une portion à contrôler de l'objet, par une commande à phase bloquée d'une pluralité d'éléments émetteurs indépendants (10) d'un palpeur multiéléments matriciel (62),
- recevoir une onde réfléchie par la structure de l'objet, au moyen d'une pluralité d'éléments récepteurs (10) indépendants les uns des autres, avec un enregistrement,
- numériser et mémoriser, dans des étapes de numérisation, dans un composant de mémoire (42, 46), les signaux reçus par les éléments récepteurs (10) durant un enregistrement,
- lire, dans ledit composant de mémoire (42, 46), durant la continuation de la réception (on the fly), les valeurs de signal d'un enregistrement mémorisées pour chaque étape de numérisation, et modifier de manière continue des valeurs de retard et/ou le nombre d'éléments récepteurs (10) pour chaque étape de numérisation des valeurs de signal lues.

2. Procédé selon la revendication 1, **caractérisé par le fait que** les valeurs de retard sont calculées depuis un retard de début mémorisé (loi focale pour la position de surface) jusqu'à un retard de fin (loi focale pour la position de fond), au moyen d'une fonction de distance 1/R, avec R = rayon.

3. Procédé selon la revendication 1 ou 2, **caractérisé par le fait que** les valeurs de retard sont mémorisées dans une table de consultation, en particulier en cas de cohérence complexe.

4. Procédé selon l'une au moins des revendications précédentes, **caractérisé par le fait qu'**une adaptation d'ouverture se fait par une modification linéaire du nombre des éléments récepteurs (10).

5. Procédé selon l'une au moins des revendications précédentes, **caractérisé par le fait qu'**un début de la modification des valeurs de retard et/ou de l'adaptation d'ouverture est déclenché par la position "temps de vol" de l'écho surface-interface.

6. Procédé selon l'une au moins des revendications précédentes, **caractérisé par le fait qu'**une totalisation de différents coups de transmetteur focalisés, pour obtenir un signal, est effectuée en utilisant une fonction numérique TGC.

7. Procédé selon l'une au moins des revendications précédentes, **caractérisé par le fait que** des valeurs de retard sont définies par des dépendances fonctionnelles telles que des termes d'une fonction de Bézier, d'une fonction polynôme ou d'une fonction d'un autre type, la fonction utilisant des indices d'élément comme argument et délivrant en sortie les valeurs de retard en tant que résultat, tandis que des paramètres sont définis en fonction de l'application.

8. Procédé selon l'une au moins des revendications précédentes, **caractérisé par le fait que** des valeurs de retard sont générées par une combinaison linéaire d'une ou de plusieurs instances d'une méthode ou par une combinaison linéaire d'instances différentes de plusieurs des méthodes mentionnées.

9. Procédé selon l'une au moins des revendications précédentes, **caractérisé par le fait que** les données sont mémorisées temporairement sur un composant de mémoire électronique (42, 46) et sont traitées ensuite selon l'une quelconque des revendications précédentes.
